# EUROPÄISCHE PATENTSCHRIFT

(11) **EP 2 347 504 B1**
(45) Veröffentlichungstag und Bekanntmachung des Hinweises auf die Patenterteilung: **23.01.2019**
(21) Anmeldenummer: 09752135.5
(22) Anmeldetag: 23.10.2009
(51) Int. Cl.: H02P 6/16, H02P 6/14, H02P 6/15, H02P 6/17

(54) **STEUERVORRICHTUNG FÜR EINEN MOTOR UND VERFAHREN ZUM STEUERN DES MOTORS**
CONTROL DEVICE FOR A MOTOR AND METHOD FOR CONTROLLING SAID MOTOR
DISPOSITIF DE COMMANDE DESTINÉ À UN MOTEUR ET PROCÉDÉ POUR COMMANDER CE MOTEUR

(30) Priorität: 14.11.2008 DE 102008057288
(43) Veröffentlichungstag der Anmeldung: 27.07.2011
(73) Patentinhaber: Continental Automotive GmbH, 30165 Hannover (DE)
(72) Erfinder: MAIER, Thomas, 92431 Neunburg v. Wald (DE); SCHIKORA, Christoph, 93055 Regensburg (DE); WIERCIOCH, Thomas, 93055 Regensburg (DE)
(86) Internationale Anmeldenummer: PCT/EP2009/063990
(87) Internationale Veröffentlichungsnummer: WO 2010/054922

(56) Entgegenhaltungen:
- US-A1- 2004 095 089
- US-A1- 2007 267 990
- US-B1- 6 465 975

## Beschreibung

Die Erfindung betrifft eine Steuervorrichtung für einen Motor, insbesondere einen bürstenlosen Gleichstrommotor, der eine Brückenschaltung zur Erzeugung eines Drehfelds für den Motor sowie eine Sensorik zur Erfassung einer Position des Rotors des Motors umfasst, wobei aus einem die Rotorposition repräsentierenden Signal ein Ansteuersignal für die Brückenschaltung abgeleitet werden kann. Siehe zum Beispiel das Dokument des Standes der Technik US 6 465 975 B1 (NAIDU MALAKONDAIAH [US]).

Die Erfindung betrifft ferner ein Verfahren zum Steuern eines Motors, insbesondere eines bürstenlosen Gleichstrommotors, bei dem eine Brückenschaltung ein Drehfeld für den Motor erzeugt und eine Sensorik eine Position eines Rotors des Motors erfasst, und aus einem die Rotorposition repräsentierenden Signal ein Ansteuersignal für die Brückenschaltung abgeleitet wird.

Motoren, insbesondere bürstenlose Gleichstrommotoren (brushless DC-Motor, BLDC-Motor) werden häufig als Antrieb oder als Stellglied in Kraftfahrzeuganwendungen genutzt. Ein bürstenloser Gleichstrommotor wird z.B. in einem Kraftfahrzeug-Getriebe als Stellglied verwendet. Die Ansteuerung erfolgt bei diesem meist mit der bekannten und kostengünstigen Blockkommutierung. Im Rahmen der Steuerung des Motors erfolgt bei manchen Anwendungen eine Regelung der Drehzahl und der Position des Rotors des Motors. Es bestehen hohe Anforderungen hinsichtlich des Drehmoments, der Drehzahl und der Auflösung der Position.

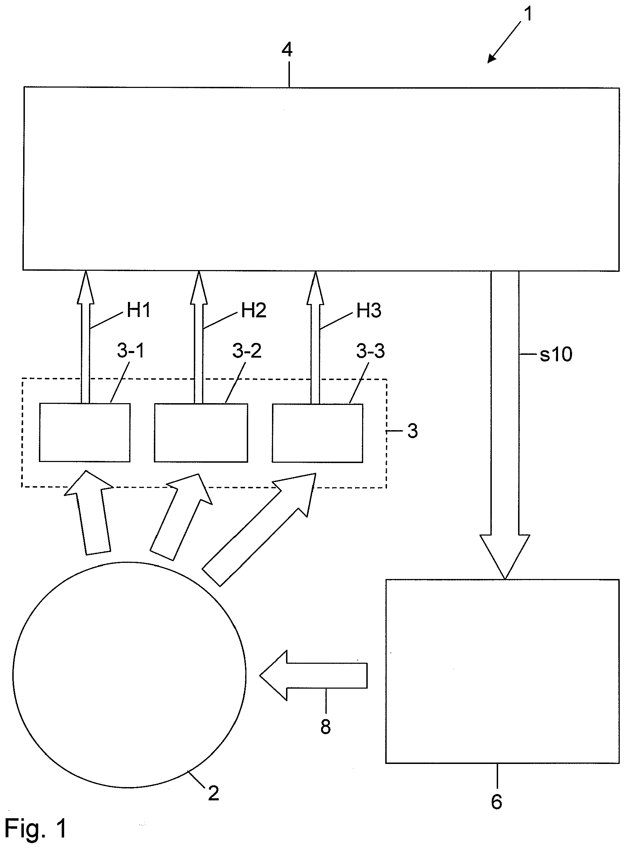

Fig. 1 zeigt das Prinzip einer bekannten Steuervorrichtung für einen bürstenlosen Gleichstrommotor, beispielsweise als Stellglied für ein Kraftfahrzeug-Getriebe, bei welchem besagte Blockkommutierung zum Einsatz kommt.

Bei der Blockkommutierung werden drei Hall-Sensoren oder -Schalter 3-1, 3-2, 3-3 einer Sensorik 3 verwendet, welche die Position des Rotors des Motors 2 erfassen. Hierzu sind die drei Hall-Sensoren 3-1, 3-2, 3-3 in einem vorgegebenen Winkel zueinander um die Rotorwelle angeordnet. Bei einem Motor mit vier Polpaaren sind die Hall-Sensoren jeweils um 15° zueinander versetzt. In Abhängigkeit der durch die Hall-Sensoren detektierten Rotorposition wird von einem Mikrocontroller 4, dem von jedem der Hall-Sensoren 3-1, 3-2, 3-3 ein Inkrementalsignal H1, H2, H3 zugeführt wird, eine entsprechende Schaltelementkombination einer Brückenschaltung 6 zur Kommutierung des Motors 2 angesteuert (vgl. Ansteuersignal s10). Die Brückenschaltung 6 umfasst typischerweise eine B6-Brücke mit insgesamt sechs Schaltelementen (z.B. MOSFETs) sowie die jeweiligen Treiber für die Schaltelemente. Durch die Brückenschaltung 6 wird dann das zum Betrieb des Motors 2 notwendige Drehfeld erzeugt (vgl. Bezugszeichen 8).

Durch die Mikrocontrollersteuerung der Motorkommutierung ergibt sich eine hohe Prozessorlast, da auf dem Mikrocontroller 4 pro Hall-Zustandswechsel ein Interrupt ausgelöst wird. Aus diesem Grund kann die Prozessorlast bei hoher Motordrehzahl und bei gleichzeitiger Ansteuerung von mehreren Motoren sehr groß werden. Die Ansteuerung mehrerer Motoren ist beispielsweise bei einem Kraftfahrzeug-Getriebe notwendig, bei dem bei einem Gangwechsel auch mindestens eine über einen eigenen Motor angesteuerte Kupplung betätigt wird.

Darüber hinaus läuft auf dem Mikrocontroller 4 ein übergeordneter Prozess zur Positions- und Drehzahlregelung des Motors 2, der über ein taskgebundenes Betriebssystem in einer regelmäßigen Task aufgerufen wird. Die Regelung nutzt als Eingangsgröße die von den Hall-Sensoren 3-1, 3-2, 3-3 zur Verfügung gestellten Inkrementalsignale H1, H2, H3 und leitet hieraus Position und Drehzahl des Motors 2 ab.

Die Steuervorrichtung erlaubt ein Vorkommutieren des Motors 2. Die Vorkommutierung wird durch den Mikrocontroller 4 realisiert, welcher zu diesem Zweck die Inkrementalsignale H1, H2, H3 der Hall-Sensoren 3-1, 3-2, 3-3 auswertet und in Abhängigkeit der Drehzahl den Zeitpunkt der Kommutierung und damit den Winkelversatz festlegt. Die Vorkommutierung ist jedoch lediglich synchron zur Motorkommutierung möglich. Darüber hinaus kann diese in nur einer Drehrichtung des Motors erfolgen und ist drehzahlabhängig.

Wie aus der vorangegangenen Beschreibung deutlich wurde, erzeugt die Motorkommutierung eine sehr hohe Prozessorlast des Mikrocontrollers, welcher deshalb, da eine bestimmte Prozessorlast aus Sicherheitsgründen nicht überschritten werden darf, sehr leistungsfähig sein muss. Dadurch muss jedoch ein sehr teurer Mikrocontroller für die Steuervorrichtung eingesetzt werden.

Es ist daher Aufgabe der vorliegenden Erfindung, eine Steuervorrichtung für einen Motor, insbesondere einen bürstenlosen Gleichstrommotor, anzugeben, welche den Einsatz eines einfacheren und kostengünstigeren Mikroprozessors ermöglicht. Es ist weiterhin Aufgabe der vorliegenden Erfindung, ein Verfahren zum Steuern des Motors, insbesondere des bürstenlosen Gleichstrommotors, anzugeben, welches eine Motorkommutierung mit verringerter Prozessorlast eines Mikrocontrollers erlaubt.

Diese Aufgaben werden gelöst durch eine Steuervorrichtung mit den Merkmalen des Patentanspruches 1 bzw. ein Verfahren mit den Merkmalen des Patentanspruches 14. Vorteilhafte Ausgestaltungen sind jeweils in den abhängigen Patentansprüchen angegeben.

Die Erfindung schafft eine Steuervorrichtung für einen Motor, insbesondere einen bürstenlosen Gleichstrommotor. Die Steuervorrichtung umfasst eine Brückenschaltung zur Erzeugung eines Drehfelds für den Motor. Sie umfasst ferner eine Sensorik zur Erfassung einer Position eines Rotors des Motors, wobei aus einem die Rotorposition repräsentierenden Signal ein Ansteuersignal für die Brückenschaltung abgeleitet werden kann. Erfindungsgemäß umfasst die Sensorik einen die Absolutposition des Rotors erfassenden Absolutwert, der dazu ausgebildet ist, aus der Absolutposition zumindest ein Inkrementalsignal abzuleiten und direkt einem Ansteuerbaustein zur Ansteuerung der Brückenschaltung für die Kommutierung des Motors zur Verfügung zu stellen.

Anstatt die Inkrementalsignale ein Mikrocontroller der Steuervorrichtung zuzuführen, werden die entsprechenden Signale einem separaten Ansteuerbaustein zur Ansteuerung der Brückenschaltung direkt zugeführt. Somit wird der Mikrocontroller nicht mehr durch die Kommutierung belastet, da diese selbständig über den Absolutwertgeber in Verbindung mit dem Ansteuerbaustein erfolgt. Dadurch können insbesondere die die Prozessorlast erhöhenden Interrupts des Mikrocontrollers vollständig vermieden werden. Damit ist es auch ohne Weiteres möglich, einen einzigen Mikrocontroller zur Ansteuerung bzw. Überwachung einer Mehrzahl an Motoren einzusetzen.

Zweckmäßigerweise umfasst die Steuervorrichtung einen Mikrocontroller, welchem kommutierungsunabhängig von dem Absolutwertgeber ein die Absolutposition repräsentierendes Absolutpositionssignal zuführbar ist. Insbesondere ist der Mikrocontroller dazu ausgebildet, unabhängig von der Motorkommutierung aus dem Absolutpositionssignal die Position und Drehzahl des Rotors zu bestimmen. Zur Bestimmung der Position und Drehzahl des Rotors wird z.B. vor dem Aufruf eines in dem Mikrocontroller laufenden Positions- und Drehzahlreglers die letzte Position des Rotors ermittelt. Ein Vorteil besteht darin, dass die Ermittlung der Position und der Drehzahl des Rotors in dem Mikrocontroller ohne Interrupt erfolgen kann, wodurch die Prozessorlast des Mikrocontrollers gering gehalten werden kann. Darüber hinaus bietet die Zuführung eines die Absolutposition repräsentierenden Absolutpositionssignals zu dem Mikrocontroller den Vorteil einer wesentlich höheren Auflösung, mit der die Position des Rotors erfasst werden kann.

Das bei der erfindungsgemäßen Steuervorrichtung verwendete Prinzip besteht somit darin, einen Absolutwertgeber als Sensor und einen separaten Ansteuerbaustein für die Brückenschaltung vorzusehen, wobei die Erfassung der Rotorposition durch den Mikrocontroller asynchron zur Motorkommutierung erfolgen kann.

Alternativ ist die Steuervorrichtung dazu ausgebildet, dass dem Mikrocontroller von dem Ansteuerbaustein die aus dem zumindest einen Inkrementalsignal abgeleitete Rotorposition kommutierungsunabhängig zur Verfügung gestellt wird. Zu diesem Zweck kann das zumindest eine Inkrementalsignal in dem Ansteuerbaustein zwischengespeichert sein. Der Mikrocontroller kann dann z.B. durch einen Speicherzugriff auf das zumindest eine Inkrementalsignal zugreifen. Bei dieser Ausgestaltung ist es gegebenenfalls entbehrlich, dass dem Mikrocontroller von dem Absolutwertgeber das die Absolutposition repräsentierende Absolutpositionssignal zugeführt wird.

Gemäß einer weiteren zweckmäßigen Ausgestaltung stellt der Absolutwertgeber als Inkrementalsignal ein simuliertes Hall-Signal zur Verfügung. Besonders zweckmäßig ist es, wenn der Absolutwertgeber drei Inkrementalsignale zur Verfügung stellt, da hierdurch die Motorkommutierung auf einfache Weise vorgenommen werden kann.

Gemäß einer weiteren zweckmäßigen Ausgestaltung umfasst die Brückenschaltung ausschließlich Schaltelemente, insbesondere Halbleiterschaltelemente, zur Ansteuerung des Motors. Dabei ist ein Treiber der Schaltelemente in dem Ansteuerbaustein vorgesehen. Diese Ausgestaltung ermöglicht eine einfachere und kostengünstigere Bereitstellung der Brückenschaltung, da der Treiber "ausgelagert" ist.

In einer weiteren Ausgestaltung ist in dem zumindest einen zur Verfügung gestellten Inkrementalsignal ein Vorkommutierungswinkel enthalten, welcher durch den Absolutwertgeber in das jeweilige Inkrementalsignal integrierbar ist. Dabei kann der Vorkommutierungswinkel durch den Absolutwertgeber oder den Mikroprozessor oder den Ansteuerbaustein in Abhängigkeit der Drehrichtung des Rotors eingestellt oder vorgegeben werden. Im Gegensatz zum Stand der Technik erlaubt die erfindungsgemäße Steuervorrichtung das Vorsehen eines Vorkommutierungswinkels in beiden Drehrichtungen, wodurch die Flexibilität beim Betrieb des Motors erhöht ist. Insbesondere kann der Vorkommutierungswinkel sogar durch den Absolutwertgeber oder den Mikroprozessor oder den Ansteuerbaustein im Stillstand des Rotors und/oder im dynamischen Betrieb des Motors eingestellt oder vorgegeben werden. Stillstand des Rotors bedeutet, dass dessen Drehzahl Null ist. Durch das Vorsehen eines Vorkommutierungswinkels im Stillstand des Rotors ist die Ausnutzung des Reluktanzmoments im Stillstand des Motors möglich. Das Einstellen eines Vorkommutierungswinkels im dynamischen Betrieb des Motors erlaubt es, den Feldschwächbetrieb des Motors auszunutzen. Dabei kann der Vorkommutierungswinkel in Abhängigkeit der Drehzahl des Motors verändert werden, wodurch eine besonders hohe Flexibilität möglich ist.

Eine besonders gute Steuerbarkeit des Motors ergibt sich dann, wenn der Absolutwertgeber eine Auflösung von besser als 15°, insbesondere von bis zu 1° aufweist. Eine höhere Auflösung als 15°, wie diese beispielsweise im Stand der Technik unter Verwendung dreier Hall-Sensoren nur möglich ist, bringt wesentlichen Vorteile bei der Berechnung der Drehzahl, insbesondere bei niedrigen Drehzahlen, mit sich. Darüber hinaus kann auch die Positionierung auf genauere Weise ermittelt werden, da insbesondere Positionen zwischen zwei Hall-Sensoren ermittelt werden können, welche bei herkömmlichen Hall-Sensoren nicht bestimmt werden können.

Gemäß einer weiteren zweckmäßigen Ausgestaltung sind in dem Ansteuerbaustein Schaltungskomponenten zur Kommutierung des Motors vorgesehen. Dies hat zur Folge, dass die Kommutierung durch Hardware-Komponenten erfolgen kann. Im Gegensatz dazu erfolgt die Motorkommutierung im Stand der Technik durch den Mikrocontroller und damit durch eine Software. Diese bringt jedoch, wie einleitend bereits beschrieben, den Nachteil von Interrupts mit sich, wodurch die Prozessorlast in nachteiliger Weise ansteigt.

Die Erfindung schafft weiter ein Verfahren zum Steuern eines Motors, insbesondere eines bürstenlosen Gleichstrommotors, bei dem eine Brückenschaltung ein Drehfeld für den Motor erzeugt und eine Sensorik eine Position eines Rotors des Motors erfasst, und aus einem die Rotorposition repräsentierenden Signal ein Ansteuersignal für die Brückenschaltung abgeleitet wird. Erfindungsgemäß erfasst ein Absolutwertgeber der Sensorik eine Absolutposition des Rotors. Aus der Absolutposition wird zumindest ein Inkrementalsignal abgeleitet und direkt einem Ansteuerbaustein zur Ansteuerung der Brückenschaltung für die Kommutierung des Motors zur Verfügung gestellt. Hierdurch kann die direkte Kommutierung der Brückenschaltung über die Sensorik, d.h. den Absolutwertgeber, ohne Belastung eines Mikrocontrollers erfolgen, wobei die Rotorposition asynchron, d.h. kommutierungsunabhängig, dem Mikrocontroller zur Verfügung gestellt werden kann. Im Übrigen sind mit dem erfindungsgemäßen Verfahren die gleichen Vorteile verbunden, wie diese vorstehend in Verbindung mit einer erfindungsgemäßen Steuervorrichtung erläutert wurden.

Gemäß einer zweckmäßigen Ausgestaltung wird kommutierungsunabhängig von dem Absolutwertgeber ein die Absolutposition repräsentierendes Absolutpositionssignal einem Mikrocontroller zugeführt.

Gemäß einer weiteren zweckmäßigen Ausgestaltung bestimmt der Mikrocontroller unabhängig von der Motorkommutierung aus dem Absolutpositionssignal die Position und Drehzahl des Rotors. Hierzu wird vor dem Aufruf eines Positions- und Drehzahlreglers, der auf dem Mikrocontroller läuft, die letzte Position des Rotors ermittelt. Vorteilhafterweise kann die Ermittlung von Position und Drehzahl in dem Mikrocontroller ohne Interrupts erfolgen.

In einer weiteren zweckmäßigen Ausgestaltung wird dem Mikrocontroller von dem Ansteuerbaustein die aus dem zumindest einen Inkrementalsignal abgeleitete Rotorposition kommutierungsunabhängig zur Verfügung gestellt. In diesem Fall ist es gegebenenfalls nicht notwendig, dass dem Mikrocontroller das die Absolutposition repräsentierende Absolutpositionssignal zugeführt wird.

Zweckmäßigerweise stellt der Absolutwertgeber als Inkrementalsignal ein simuliertes Hall-Signal zur Verfügung. Es ist weiterhin zweckmäßig, wenn der Absolutwert drei Inkrementalsignale zur Verfügung stellt, wodurch die Motorkommutierung auf herkömmliche Weise durchführbar ist.

Gemäß einer weiteren zweckmäßigen Ausgestaltung wird in dem zumindest einen zur Verfügung gestellten Inkrementalsignal ein Vorkommutierungswinkel berücksichtigt, welcher durch den Absolutwertgeber in das jeweilige Inkrementalsignal integriert wird. Dabei wird der Vorkommutierungswinkel durch den Absolutwertgeber oder den Mikroprozessor oder den Ansteuerbaustein in Abhängigkeit der Drehrichtung des Rotors eingestellt oder vorgegeben. Insbesondere wird der Vorkommutierungswinkel durch den Absolutwertgeber oder den Mikroprozessor oder den Ansteuerbaustein im Stillstand des Rotors und/oder im dynamischen Betrieb des Motors eingestellt oder vorgegeben, wodurch einerseits die Ausnutzung des Reluktanzmoments im Stillstand und andererseits der Feldschwächbetrieb im dynamischen Betrieb des Rotors möglich wird. Insbesondere kann der Vorkommutierungswinkel in Abhängigkeit der Drehzahl des Motors verändert werden.

Die Erfindung wird nachfolgend näher anhand eines Ausführungsbeispiels in der Zeichnung erläutert. Es zeigen:
- Fig. 1: eine bekannte und bereits beschriebene Steuervorrichtung für einen bürstenlosen Gleichstrommotor, und

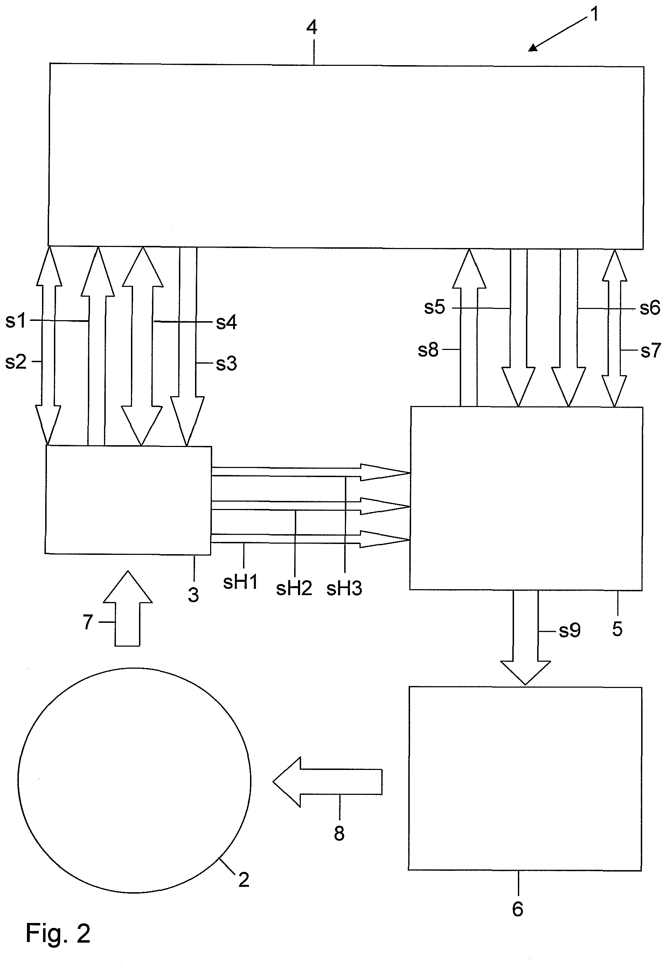

- Fig. 2: eine erfindungsgemäße Steuervorrichtung für einen Motor, insbesondere einen bürstenlosen Gleichstrommotor.

Fig. 1 zeigt eine bereits bekannte und beschriebene Steuervorrichtung 1 für einen bürstenlosen Gleichstrommotor 2. Eine erfindungsgemäße Steuervorrichtung 1 für einen bürstenlosen Gleichstrommotor 2 basiert auf dem bereits beschriebenen Prinzip, verwendet jedoch eine andere Sensorik 3 und einen zusätzlichen Ansteuerbaustein 5 zur Ansteuerung der Brückenschaltung 6 für die Kommutierung des bürstenlosen Gleichstrommotors 2 (Motor).

Die Sensorik 3 ist bei der erfindungsgemäßen Steuervorrichtung 1 durch einen Absolutwertgeber 3 gebildet. Dieser ist dazu ausgebildet, aus der Absolutposition zumindest ein Inkrementalsignal sH1, sH2, sH3 abzuleiten und direkt dem Ansteuerbaustein 5 zur Ansteuerung der Brückenschaltung 6 für die Kommutierung des Motors zur Verfügung zu stellen. Der Ansteuerbaustein 5 weist einerseits Schaltungskomponenten zur Kommutierung des Motors 2 auf, so dass die Motorkommutierung durch Hardwarekomponenten realisiert werden kann. Andererseits umfasst der Ansteuerbaustein 5 einen Treiber für die Schaltelemente der Brückenschaltung 6, so dass letzterer auf einfachere und kostengünstigere Weise bereitgestellt werden kann.

Neben den drei Inkrementalsignalen sH1, sH2, sH3 stellt der Absolutwertgeber 3 ein Absolutpositionssignal s1 an den Mikrocontroller 4 der Steuervorrichtung zur Verfügung. Die hochauflösende Absolutposition kann direkt von dem Mikrocontroller 4 eingelesen werden, so dass dieser unabhängig von der Motorkommutierung und somit ohne Interrupts mit einer wesentlich größeren Auflösung die Rotorposition erfassen kann. Bevor ein in dem Mikrocontroller 4 angeordneter Positions- und Drehzahlregler aufgerufen wird, wird die letzte Position des Rotors des Motors 2 eingelesen und daraus Position und Drehzahl des Rotors bestimmt.

Ferner besteht eine SPI (Serial Peripheral Interface)-Kommunikation zwischen dem Absolutwertgeber 3 und dem Mikrocontroller 4 zur Konfiguration des Absolutwertgebers 3. Diese ist durch s2 gekennzeichnet. Über ein Drehrichtungsvorgabesignal s3 kann eine richtungsabhängige Vorkommutierung vorgenommen werden, indem der entsprechende Vorkommutierungswinkel durch den Absolutwertgeber 3 in den simulierten Hall-Signalen sH1, sH2 und sH3 berücksichtigt wird. Über ein Diagnosesignal s4 kann der Absolutwertgeber 3 ein Feedback-Signal an den Mikrocontroller 4 übertragen.

s5 kennzeichnet ein Geschwindigkeitsvorgabesignal des Mikrocontrollers 4 an den Ansteuerbaustein 5. s6 stellt ein Richtungsvorgabesignal für die Ansteuerung des Ansteuerbausteins 5 dar. Dieser verarbeitet das Geschwindigkeitsvorgabesignal s5 und das Richtungsvorgabesignal s6 und steuert die Schaltelemente der Brückenschaltung 6 zur Erzeugung eines Drehfelds 8 entsprechend an. Das Ansteuersignal für die Brückenschaltung 6 ist mit s9 gekennzeichnet. Der Ansteuerbaustein 5 kommuniziert über ein SPI-Signal s7 mit dem Mikrocontroller 4, wobei die Kommunikation bidirektional erfolgen kann. Insbesondere kann der Ansteuerbaustein 5 hierbei die Anzahl der Hall-Wechsel über ein Signal s8 an den Mikrocontroller 4 übertragen.

Unter Berücksichtigung der simulierten Hall-Signale sH1, sH2, sH3 sowie des Geschwindigkeits- und Richtungsvorgabesignals s5, s6 steuert der Ansteuerbaustein 5 die Brückenschaltung 6 vermittels des Ansteuersignals s9 an, worauf die Brückenschaltung 6 das Drehfeld 8 für den Motor 2 durch entsprechende Kommutierung erzeugt.

Die Erfindung bietet die einfache Möglichkeit, eine Vorkommutierung des Motors zu realisieren, was zu einer Steigerung der Performance des Motors führt und damit große Vorteile bezüglich der Kosten bedeutet. Der Unterschied zu der aus dem Stand der Technik bekannten Lösung gemäß Fig. 1 besteht darin, dass die Herstellung des Vorkommutierungswinkels nicht über die Software und damit synchron zur Drehzahl des Motors 2 erfolgt, sondern direkt über den Absolutwertgeber 3 erfolgen kann. Hierdurch kann der Vorkommutierungswinkel in Abhängigkeit der Drehrichtung und dynamisch während des Betriebs im Sensor eingestellt werden. Es ist sogar möglich, den Vorkommutierungswinkel im Stillstand des Motors einzustellen. Hierzu werden die Inkrementalsignale sH1, sH2, sH3, welche simulierte Hall-Signale darstellen, und direkt den Ansteuerbaustein 5 der Brückenschaltung 6 steuern, um einen bestimmten Winkel verschoben geschaltet. Hierdurch kann der Motor 2 beliebig vorkommutiert werden.

Ein weiterer Vorteil besteht darin, dass der Vorkommutierungswinkel nicht wie bei einer in Software realisierten Lösung drehzahlabhängig ist, sondern bereits bei Drehzahl 0 ein fester Vorkommutierungswinkel gewählt werden kann. Dieser erlaubt nicht nur den Feldschwächbereich des Motors bei höherer Drehzahl auszunutzen, sondern auch ein mögliches Reluktanzmoment im Stillstand. Damit lässt sich nicht nur die Performanz des Motors 2 bei höherer Drehzahl, bei der dieser im Feldschwächbetrieb betrieben wird, verbessern, sondern auch das Drehmoment bei Stillstand des Motors 2 durch Ausnutzung des Reluktanzmoments.

Um sowohl den Feldschwächbereich als auch das Reluktanzmoment des Motors 2 bestmöglich ausnutzen zu können, kann folgende Umsetzung gewählt werden: Zur Ausnutzung des Reluktanzmoments wird beim Start der Steuervorrichtung oder schon während der Fertigung ein fester richtungsabhängiger Vorkommutierungswinkel eingestellt. Somit kann man bereits im Stillstand das zusätzliche Reluktanzmoment ausnutzen, was bei heutigen Software-Lösungen nicht möglich ist.

Nach Hochlauf des Motors 2 kann dann durch dynamisches Verstellen des Vorkommutierungswinkels, z.B. über das SPI (Serial Peripheral Interface) der Motor 2 in den Feldschwächbereich gebracht werden und damit die maximal mögliche Drehzahl gesteigert werden. Dies kann völlig asynchron zur Motorkommutierung erfolgen und damit durch das Betriebssystem des Mikrocontrollers 4 erledigt werden.

Zusätzlich ist es möglich, die Bestimmung des dynamischen Vorkommutierungswinkels vollständig in dem Absolutwertgeber zu realisieren, wobei bei einer entsprechenden Ausbildung des Absolutwertgebers der Mikrocontroller vollständig von der Aufgabe der Vorkommutierung entlastet werden könnte.

Ebenso ist eine automatische Bestimmung des drehzahlabhängigen Vorkommutierungswinkels in dem Ansteuerbaustein 5 der Brückenschaltung 6 möglich. Dies bedeutet, es wird nur ein einstellbarer fester richtungsabhängiger Vorkommutierungswinkel in dem Absolutwertgeber vorgesehen. Der dynamische drehzahlabhängige Vorkommutierungswinkel erfolgt über den Ansteuerbaustein 5 der Brückenschaltung 6.

Die Erfindung ermöglicht damit die direkte Kommutierung der Brückenschaltung 6 über den Absolutwertgeber 3, ohne dass hierdurch eine Prozessorlast des Mikrocontrollers 4 erzeugt wird. Dem Mikrocontroller 4 kann die Rotorposition asynchron, d.h. kommutierungsunabhängig, zur Verfügung gestellt werden. Darüber hinaus ist eine Realisierung der Motorvorkommutierung über den Absolutwertgeber und/oder den Ansteuerbaustein 5 möglich, wodurch auf eine entsprechende Software in dem Mikrocontroller 4 verzichtet werden kann.

Die Verwendung eines Absolutwertgebers weist darüber hinaus eine wesentlich bessere Auflösung von bis zu 1° auf, wodurch Vorteile bei der Drehzahlberechnung und Positionierung erzielt werden können. Die Drehzahlberechnung wird insbesondere bei geringer Drehzahl des Motors verbessert. Hinsichtlich der Positionierung besteht nun auch die Möglichkeit, Positionen zu ermitteln, die zwischen zwei realen Hall-Sensoren liegen, wie diese im Stand der Technik verwendet werden.

Durch die Ausnutzung des Feldschwächbetriebs und des Reluktanzmoments kann die Motorperformance weiterhin gesteigert werden oder aber das Design des Motors minimiert werden. Darüber hinaus bringt die Erfindung den Vorteil mit sich, dass der Mikroprozessor 4 von der Ansteuerung der Brückenschaltung 6 entlastet ist, da dies hardwareseitig durch den Ansteuerbaustein 5, beispielsweise einen ASIC, erfolgt.

## Patentansprüche

1. Steuervorrichtung (1) für einen Motor (2), insbesondere einen bürstenlosen Gleichstrommotor, umfassend:
- eine Brückenschaltung (6) zur Erzeugung eines Drehfelds für den Motor (2);
- einen Mikrocontoller (4);
- eine Sensorik zur Erfassung einer Position eines Rotors des Motors (2), wobei aus einem die Rotorposition repräsentierenden Signal ein Ansteuersignal für die Brückenschaltung (6) abgeleitet werden kann, **dadurc h gekennzeichnet**, dass
die Sensorik einen die Absolutposition des Rotors erfassenden Absolutwertgeber (3) umfasst, der dazu ausgebildet ist, aus der Absolutposition zumindest ein Inkrementalsignal (sH1, sH2, sH3) abzuleiten und unter Umgehung des Mikrocontrollers (4) direkt einem Ansteuerbaustein (5) zur Ansteuerung der Brückenschaltung (6) für die Kommutierung des Motors (2) zur Verfügung zu stellen, wobei dem Mikrocontroller (4) kommutierungsunabhängig von dem Absolutwertgeber (3) ein die Absolutposition repräsentierendes Absolutpositionssignal (s1) zuführbar ist.

2. Steuervorrichtung nach Anspruch 1,
**dadurch gekennzeichnet, dass**
der Mikrocontroller (4) dazu ausgebildet ist, unabhängig von der Motorkommutierung aus dem Absolutpositionssignal (s1) die Position und Drehzahl des Rotors zu bestimmen.

3. Steuervorrichtung nach Anspruch 1,
**dadurch gekennzeichnet, dass**
dem Mikrocontroller (4) von dem Ansteuerbaustein (5) die aus dem zumindest einen Inkrementalsignal (sH1, sH2, sH3) abgeleitete Rotorposition kommutierungsunabhängig zur Verfügung gestellt wird.

4. Steuervorrichtung nach einem der vorherigen Ansprüche,
**dadurch gekennzeichnet, dass**
der Absolutwertgeber (3) als Inkrementalsignal (sH1, sH2, sH3) ein simuliertes Hall-Signal zur Verfügung stellt.

5. Steuervorrichtung nach einem der vorherigen Ansprüche,
**dadurch gekennzeichnet, dass**
der Absolutwertgeber (3) drei Inkrementalsignale zur Verfügung stellt.

6. Steuervorrichtung nach einem der vorherigen Ansrpüche,
**dadurch gekennzeichnet, dass**
die Brückenschaltung (6) ausschließlich Schaltelemente, insbesondere Halbleiterschaltelmente, zur Ansteuerung des Motors (2) umfasst und ein Treiber der Schaltelemente in dem Ansteuerbaustein (5) vorgesehen ist.

7. Steuervorrichtung nach einem der vorherigen Ansprüche,
**dadurch gekennzeichnet, dass**
in dem zumindest einen zur Verfügung gestellten Inkrementalsignal (sH1, sH2, sH3) ein Vorkommutierungswinkel enthalten ist, welcher durch den Absolutwertgeber (3) in das jeweilige Inkrementalsignal (sH1, sH2, sH3) integrierbar ist.

8. Steuervorrichtung nach Anspruch 7,
**dadurch gekennzeichnet, dass**
der Vorkommutierungswinkel durch den Absolutwertgeber (3) oder den Mikrocontroller (4) oder den Ansteuerbaustein (5) in Abhängigkeit der Drehrichtung des Rotors eingestellt oder vorgegeben werden kann.

9. Steuervorrichtung nach Anspruch 7 oder 8,
**dadurch gekennzeichnet, dass**
der Vorkommutierungswinkel durch den Absolutwertgeber (3) oder den Mikrocontroller (4) oder den Ansteuerbaustein (5) im Stillstand des Rotors und/oder im dynamischen Betrieb des Motors (2) eingestellt oder vorgegeben werden kann.

10. Steuervorrichtung nach einem der Ansprüche 7 bis 9,
**dadurch gekennzeichnet, dass**
der Vorkommutierungswinkel in Abhängigkeit der Drehzahl des Motors (2) veränderbar ist.

11. Steuervorrichtung nach einem der vorherigen Ansprüche,
**dadurch gekennzeichnet, dass**
der Absolutwertgeber (3) eine Auflösung von besser als 15°, insbesondere von bis zu 1°, aufweist.

12. Steuervorrichtung nach einem der vorherigen Ansprüche,
**dadurch gekennzeichnet, dass**
in dem Ansteuerbaustein (5) Schaltungskomponenten zur Kommutierung des Motors (2) vorgesehen sind.

13. Verfahren zum Steuern eines Motors (2), insbesondere eines bürstenlosen Gleichstrommotors, mittels eines Mikrocontrollers (4), wobei :
- eine Brückenschaltung (6) ein Drehfeld für den Motor (2) erzeugt;
- eine Sensorik eine Position eines Rotors des Motors (2) erfasst, und aus einem die Rotorposition repräsentierenden Signal ein Ansteuersignal für die Brückenschaltung abgeleitet wird;
**dadurch gekennzeichnet, dass**
- ein Absolutwertgeber (3) der Sensorik eine Absolutposition des Rotors erfasst;
- aus der Absolutposition zumindest ein Inkrementalsignal (sH1, sH2, sH3) abgeleitet wird und unter Umgehung des Mikrocontrollers (4) direkt einem Ansteuerbaustein (5) zur Ansteuerung der Brückenschaltung (6)
für die Kommutierung des Motors (2) zur Verfügung gestellt wird; und dass ,
kommutierungsunabhängig von dem Absolutwertgeber (3) ein die Absolutposition repräsentierendes Absolutpositionssignal (s1) dem Mikrocontroller (4) zugeführt wird.

14. Verfahren nach Anspruch 13,
**dadurch gekennzeichnet, dass**
der Mikrocontroller (4) unabhängig von der Motorkommutierung aus dem Absolutpositionssignal (s1) die Position und Drehzahl des Rotors bestimmt.

15. Verfahren nach Anspruch 13,
**dadurch gekennzeichnet, dass**
dem Mikrocontroller (4) von dem Ansteuerbaustein (5) die aus dem zumindest einen Inkrementalsignal (sH1, sH2, sH3) abgeleitete Rotorposition kommutierungsunabhängig zur Verfügung gestellt wird.

16. Verfahren nach einem der Ansprüche 12 bis 15
**dadurch gekennzeichnet, dass**
der Absolutwertgeber (3) als Inkrementalsignal (sH1, sH2, sH3) ein simuliertes Hall-Signal zur Verfügung stellt.

17. Verfahren nach einem der Ansprüche 12 bis 16,
**dadurch gekennzeichnet, dass**
der Absolutwertgeber (3) drei Inkrementalsignale zur Verfügung stellt.

18. Verfahren nach einem der Ansprüche 12 bis 17,
**dadurch gekennzeichnet, dass**
in das zumindest eine zur Verfügung gestellte Inkrementalsignal (sH1, sH2, sH3) ein Vorkommutierungswinkel berücksichtigt
wird, welcher durch den Absolutwertgeber (3) in das jeweilige Inkrementalsignal (sH1, sH2, sH3) integriert wird.

19. Verfahren nach Anspruch 18,
**dadurch gekennzeichnet, dass**
der Vorkommutierungswinkel durch den Absolutwertgeber (3) oder den Mikrocontroller (4) oder den Ansteuerbaustein (5) in Abhängigkeit der Drehrichtung des Rotors eingestellt oder vorgegeben wird.

20. Verfahren nach Anspruch 18 oder 19,
**dadurch gekennzeichnet, dass**
der Vorkommutierungswinkel durch den Absolutwertgeber (3) oder den Mikrocontroller (4) oder den Ansteuerbaustein (5) im Stillstand des Rotors und/oder im dynamischen Betrieb des Motors (2) eingestellt oder vorgegeben wird.

21. Verfahren nach einem der Ansprüche 18 bis 20,
**dadurch gekennzeichnet, dass**
der Vorkommutierungswinkel in Abhängigkeit der Drehzahl des Motors (2) verändert wird.

## Claims

1. Control apparatus (1) for a motor (2), in particular for a brushless direct-current motor, comprising:
- a bridge circuit (6) for production of a rotating field for the motor (2);
- a microcontroller (4);
- a sensor system for detection of a position of a rotor of the motor (2), in which case a drive signal for the bridge circuit (6) can be derived from a signal which represents the rotor position,
**characterized in that**
the sensor system comprises an absolute value transmitter (3) which detects the absolute position of the rotor and is designed to derive at least one incremental signal (sH1, sH2, sH3) from the absolute position and while bypassing the microcontroller (4) to make this available directly to a drive module (5) for driving the bridge circuit (6) for commutation of the motor (2) wherein the absolute value transmitter (3) can supply an absolute position signal (s1), which represents the absolute position, to the microcontroller (4) independently of the commutation.

2. Control apparatus according to Claim 1,
**characterized in that**
the microcontroller (4) is designed to determine the position and rotation speed of the rotor from the absolute position signal (s1), independently of the motor commutation.

3. Control apparatus according to Claim 1,
**characterized in that**
the drive module (5) makes the rotor position, which has been derived from the at least one incremental signal (sH1, sH2, sH3), available to the microcontroller (4), independently of the commutation.

4. Control apparatus according to one of the preceding claims, **characterized in that** the absolute value transmitter (3) produces a simulated Hall signal as the incremental signal (sH1, sH2, sH3).

5. Control apparatus according to one of the preceding claims,
**characterized in that**
the absolute value transmitter (3) produces three incremental signals.

6. Control apparatus according to one of the preceding claims,
**characterized in that**
the bridge circuit (6) comprises exclusively switching elements, in particular semiconductor switching elements, for driving the motor (2), and a driver for the switching elements is provided in the drive module (5).

7. Control apparatus according to one of the preceding claims,
**characterized in that**
the at least one incremental signal (sH1, sH2, sH3) which is produced contains a pre-commutation angle, which can be integrated by the absolute value transmitter (3) in the respective incremental signal (sH1, sH2, sH3).

8. Control apparatus according to Claim 7,
**characterized in that**
the pre-commutation angle can be set or predetermined by the absolute value transmitter (3), by the microcontroller (4) or by the drive module (5) as a function of the rotation direction of the rotor.

9. Control apparatus according to Claim 7 or 8,
**characterized in that**
the pre-commutation angle can be set or predetermined by the absolute value transmitter (3), by the microcontroller (4) or by the drive module (5) when the rotor is stationary or when the motor (2) is being operated dynamically.

10. Control apparatus according to one of Claims 7 to 9,
**characterized in that**
the pre-commutation angle can be varied as a function of the rotation speed of the motor (2).

11. Control apparatus according to one of the preceding claims,
**characterized in that**
the absolute value transmitter (3) has a resolution of better than 15°, in particular of down to 1°.

12. Control apparatus according to one of the preceding claims,
**characterized in that**
circuit components for commutation of the motor (2) are provided in the drive module (5).

13. Method for controlling a motor (2), in particular a brushless direct-current motor, by means of a microcontroller (4), wherein:
- a bridge circuit (6) produces a rotating field for the motor (2);
- a sensor system detects a position of a rotor of the motor (2), and a drive signal for the bridge circuit is derived from a signal which represents the rotor position;
**characterized in that**
- an absolute value transmitter (3) in the sensor system detects an absolute position of the rotor;
- at least one incremental signal (sH1, sH2, sH3) is derived from the absolute position and while bypassing the microcontroller (4) is made available directly to a drive module (5) for driving the bridge circuit (6) for commutation of the motor (2), and **in that**
the absolute value transmitter (3) supplies an absolute position signal (s1), which represents the absolute position, to the microcontroller (4) independently of the commutation.

14. Method according to Claim 13,
**characterized in that**
the microcontroller (4) determines the position and rotation speed of the rotor from the absolute position signal (s1), independently of the motor commutation.

15. Method according to Claim 13,
**characterized in that**
the drive module (5) makes the rotor position, which has been derived from the at least one incremental signal (sH1, sH2, sH3), available to the microcontroller (4) independently of the commutation.

16. Method according to one of Claims 12 to 15,
**characterized in that**
the absolute value transmitter (3) produces a simulated Hall signal as the incremental signal (sH1, sH2, sH3).

17. Method according to one of Claims 12 to 16,
**characterized in that**
the absolute value transmitter (3) produces three incremental signals.

18. Method according to one of Claims 12 to 17,
**characterized in that**
a pre-commutation angle is taken into account in the at least one incremental signal (sH1, sH2, sH3) which is produced, and is integrated by the absolute value transmitter (3) in the respective incremental signal (sH1, sH2, sH3).

19. Method according to Claim 18,
**characterized in that**
the pre-commutation angle is set or predetermined by the absolute value transmitter (3), by the microcontroller (4) or by the drive module (5) as a function of the rotation direction of the rotor.

20. Method according to Claim 18 or 19,
**characterized in that**
the pre-commutation angle is set or predetermined by the absolute value transmitter (3), by the microcontroller (4) or by the drive module (5) when the rotor is stationary and/or when the motor (2) is being operated dynamically.

21. Method according to one of Claims 18 to 20,
**characterized in that**
the pre-commutation angle is varied as a function of the rotation speed of the motor (2).

## Revendications

1. Dispositif de commande (1) pour un moteur (2), notamment un moteur à courant continu sans balais, comprenant :
- un circuit en pont (6) destiné à générer un champ tournant pour le moteur (2) ;
- un microcontrôleur (4) ;
- un système de détection destiné à détecter une position d'un rotor du moteur (2), un signal d'excitation pour le circuit en pont (6) pouvant être dérivé à partir d'un signal représentant la position du rotor,
**caractérisé en ce que**
le système de détection comprend un transmetteur de valeur absolue (3) qui détecte la position absolue du rotor, lequel est configuré pour dériver à partir de la position absolue au moins un signal incrémental (sH1, sH2, sH3) et à le mettre à disposition directement d'un composant d'excitation (5), en contournant le microcontrôleur (4), en vue d'exciter le circuit en pont (6) pour la commutation du moteur (2), un signal de position absolue (s1) qui représente la position absolue pouvant être acheminé au microcontrôleur (4) par le transmetteur de valeur absolue (3) indépendamment de la commutation.

2. Dispositif de commande selon la revendication 1, **caractérisé en ce que** le microcontrôleur (4) est configuré pour définir la position et la vitesse de rotation du rotor à partir du signal de position absolue (s1) indépendamment de la commutation du moteur.

3. Dispositif de commande selon la revendication 1, **caractérisé en ce que** la position du rotor dérivée de l'au moins un signal incrémental (sH1, sH2, sH3) est mise à la disposition du microcontrôleur (4) par le composant d'excitation (5) indépendamment de la commutation.

4. Dispositif de commande selon l'une des revendications précédentes, **caractérisé en ce que** le transmetteur de valeur absolue (3) met à disposition en tant que signal incrémental (sH1, sH2, sH3) un signal d'effet Hall simulé.

5. Dispositif de commande selon l'une des revendications précédentes, **caractérisé en ce que** le transmetteur de valeur absolue (3) met à disposition trois signaux incrémentaux.

6. Dispositif de commande selon l'une des revendications précédentes, **caractérisé en ce que** le circuit en pont (6) comporte exclusivement des éléments de commutation, notamment des éléments de commutation à semiconducteur, pour l'excitation du moteur (2) et un circuit d'attaque des éléments de commutation se trouve dans le composant d'excitation (5).

7. Dispositif de commande selon l'une des revendications précédentes, **caractérisé en ce que** l'au moins un signal incrémental (sH1, sH2, sH3) mis à disposition contient un angle de pré-commutation qui peut être intégré dans le signal incrémental (sH1, sH2, sH3) respectif par le transmetteur de valeur absolue (3).

8. Dispositif de commande selon la revendication 7, **caractérisé en ce que** l'angle de pré-commutation peut être réglé ou prédéfini par le transmetteur de valeur absolue (3) ou le microcontrôleur (4) ou le composant d'excitation (5) en fonction du sens de rotation du rotor.

9. Dispositif de commande selon la revendication 7 ou 8, **caractérisé en ce que** l'angle de pré-commutation peut être réglé ou prédéfini par le transmetteur de valeur absolue (3) ou le microcontrôleur (4) ou le composant d'excitation (5) à l'arrêt du rotor et/ou en fonctionnement dynamique du moteur (2) .

10. Dispositif de commande selon l'une des revendications 7 à 9, **caractérisé en ce que** l'angle de pré-commutation peut être modifié en fonction de la vitesse de rotation du moteur (2).

11. Dispositif de commande selon l'une des revendications précédentes, **caractérisé en ce que** le transmetteur de valeur absolue (3) possède une résolution meilleure que 15°, pouvant notamment atteindre 1°.

12. Dispositif de commande selon l'une des revendications précédentes, **caractérisé en ce que** des composants de commutation servant à la commutation du moteur (2) se trouvent dans le composant d'excitation (5).

13. Procédé pour commander un moteur (2), notamment un moteur à courant continu sans balais, au moyen d'un microcontrôleur (4), procédé selon lequel :
- un circuit en pont (6) génère un champ tournant pour le moteur (2) ;
- un système de détection détecte une position d'un rotor du moteur (2), et un signal d'excitation pour le circuit en pont est dérivé à partir d'un signal représentant la position du rotor,
**caractérisé en ce que**
- un transmetteur de valeur absolue (3) du système de détection détecte une position absolue du rotor ;
- au moins un signal incrémental (sH1, sH2, sH3) est dérivé à partir de la position absolue et est mis à disposition directement d'un composant d'excitation (5), en contournant le microcontrôleur (4), en vue d'exciter le circuit en pont (6) pour la commutation du moteur (2) ; et **en ce que**
un signal de position absolue (s1) qui représente la position absolue est acheminé au microcontrôleur (4) par le transmetteur de valeur absolue (3) indépendamment de la commutation.

14. Procédé selon la revendication 13, **caractérisé en ce que** le microcontrôleur (4) définit la position et la vitesse de rotation du rotor à partir du signal de position absolue (s1) indépendamment de la commutation du moteur.

15. Procédé selon la revendication 13, **caractérisé en ce que** la position du rotor dérivée de l'au moins un signal incrémental (sH1, sH2, sH3) est mise à la disposition du microcontrôleur (4) par le composant d'excitation (5) indépendamment de la commutation.

16. Procédé selon l'une des revendications 12 à 15, **caractérisé en ce que** le transmetteur de valeur absolue (3) met à disposition en tant que signal incrémental (sH1, sH2, sH3) un signal d'effet Hall simulé.

17. Procédé selon l'une des revendications 12 à 16, **caractérisé en ce que** le transmetteur de valeur absolue (3) met à disposition trois signaux incrémentaux.

18. Procédé selon l'une des revendications 12 à 17, **caractérisé en ce que** dans l'au moins un signal incrémental (sH1, sH2, sH3) mis à disposition est pris en compte un angle de pré-commutation qui est intégré dans le signal incrémental (sH1, sH2, sH3) respectif par le transmetteur de valeur absolue (3) .

19. Procédé selon la revendication 18, **caractérisé en ce que** l'angle de pré-commutation est réglé ou prédéfini par le transmetteur de valeur absolue (3) ou le microcontrôleur (4) ou le composant d'excitation (5) en fonction du sens de rotation du rotor.

20. Procédé selon la revendication 18 ou 19, **caractérisé en ce que** l'angle de pré-commutation est réglé ou prédéfini par le transmetteur de valeur absolue (3) ou le microcontrôleur (4) ou le composant d'excitation (5) à l'arrêt du rotor et/ou en fonctionnement dynamique du moteur (2).

21. Procédé selon l'une des revendications 18 à 20, **caractérisé en ce que** l'angle de pré-commutation est modifié en fonction de la vitesse de rotation du moteur (2).
